(19) Europäisches Patentamt / European Patent Office / Office européen des brevets

(11) **EP 1 692 583 B1**

(12) **EUROPEAN PATENT SPECIFICATION**

(45) Date of publication and mention
of the grant of the patent:
**11.04.2012 Bulletin 2012/15**

(21) Application number: **04783781.0**

(22) Date of filing: **10.09.2004**

(51) Int Cl.:
***G06F 21/00*** (2006.01)

(86) International application number:
**PCT/US2004/029694**

(87) International publication number:
**WO 2005/043358 (12.05.2005 Gazette 2005/19)**

(54) **RECORDING CONTENT DISTRIBUTION INFORMATION INTO AN ADJUNCT TO CONTENT**

AUFZEICHNUNG VON INHALTSVERTEILUNGSINFORMATIONEN IN EINE HILFSEINRICHTUNG FÜR INHALT

ENREGISTREMENT D'INFORMATIONS DE DISTRIBUTION DE CONTENU SANS AJOUT DE CONTENU

(84) Designated Contracting States:
**AT BE BG CH CY CZ DE DK EE ES FI FR GB GR HU IE IT LI LU MC NL PL PT RO SE SI SK TR**

(30) Priority: **23.10.2003 US 692259**

(43) Date of publication of application:
**23.08.2006 Bulletin 2006/34**

(73) Proprietor: **Rovi Solutions Corporation Santa Clara, CA 95050 (US)**

(72) Inventor: **SHAVIT, Eyal Palo Alto, CA 94303 (US)**

(74) Representative: **Beresford, Keith Denis Lewis Beresford & Co.
16 High Holborn
London
WC1V 6BX (GB)**

(56) References cited:
EP-A- 0 459 046      WO-A2-02/39714
US-A1- 2002 059 238      US-A1- 2003 023 682
US-A1- 2003 125 964      US-B1- 6 564 322

- **SCHNEIER B: "APPLIED CRYPTOGRAPHY, PASSAGE" APPLIED CRYPTOGRAPHY. PROTOCOLS, ALGORITHMS, AND SOURCE CODE IN C, NEW YORK, JOHN WILEY & SONS, US, 1996, pages 13-16,270, XP000864256 ISBN: 0-471-11709-9**
- **CHI C-H ET AL: "Automatic proxy-based watermarking for WWW" COMPUTER COMMUNICATIONS, ELSEVIER SCIENCE PUBLISHERS BV, AMSTERDAM, NL, vol. 24, no. 2, 1 February 2000 (2000-02-01), pages 144-154, XP004228455 ISSN: 0140-3664**

**Description**

## FIELD OF THE INVENTION

The present invention generally relates to the distribution of content and in particular, to recording content distribution information into an adjunct to content for distribution tracking and other useful purposes.

## BACKGROUND OF THE INVENTION

The proliferation of personal computers with read/write devices such as CD-R/W and DVD-R/W, and the widespread acceptance of the Internet have become both boon and bane to content providers. The distribution of content on tangible media such as CD and DVD has become standard practice for some time now for authorized copying and distribution, because of their large storage capacity and low media cost. With the availability of high speed Internet connections, distribution through downloading of content is proving to be even more beneficial as a convenient and low cost distribution medium since it eliminates the cost of the tangible medium, the cost of its shipping to a customer, and the time that the customer has to wait for the purchased product. Unfortunately, however, these same mediums have also facilitated the unauthorized copying and distribution of content.

Various copy control systems such as Digital Rights Management ("DRM") have been proposed and/or implemented with varying degrees of success to control the copying of content. In such systems, copy control information indicating whether the content may be copied and/or how many times it may be copied, is commonly provided in an adjunct to the content specifically dedicated for rights conveyance.

In addition to controlling the copying of content, it would also be useful for enforcement, market analysis and other purposes to know content distribution information such as a trail of copier related information or a trail of network nodes participating in the distribution of content. For example, when the content distribution information is copier related information, then the copier related information may include information related to the generation of a copy of the content, such as any one or more of the following: information as to the identification of the copier (e.g., a user identification of a user of the copier or an IP address of the copier), information as to how the copy was generated (e.g., information as to when the copy was generated (e.g., the time of copy generation or other processing according to a specified time zone or the time zone associated with the copier), what computer platform and operating system was used), and information as to the format that the copy was generated into (e.g., a downloadable file residing in computer memory or a file stored on a tangible, removable medium).

Copier related information for the entire chain of copying including any one or more of who (e.g., IP address of the copier), when (e.g., time of copy generation by the copier), how (e.g., platform of the copier), and what (e.g., format of the copy) is referred to as the "trail of copier related information" or the "content transformation path" of the content. Information of the content transformation path of a copy is useful for various purposes. One use is to identify "leaks" in the distribution channels (e.g., sources of unauthorized or illegal copying). For example, if there are multiple copies of content that all have the exact same content transformation path, then the leak is directly traced to the last legitimate transformation in the path. Another use is to analyze the distribution channels that a copy has gone through for marketing purposes so that producers of the content will know where and how to distribute their content more effectively.

On the other hand, when the content distribution information is a trail of network nodes participating in the distribution of content, for example, over the Internet, then the content distribution information may include for each packet of information, the IP address of each network node that has relayed the packet up to that point on its way to its final destination. This information may then be used to determine or at least give insights into the topology of a network that includes the network nodes, and/or to the manner in which content propagates in such a network. For example, information of such sort many be especially useful in determining the network topology of a peer-to-peer ("P2P") network, and/or the manner in which content propagates in a P2P network.

An "adjunct" to content is something that is associated with the content, but not necessarily a part of it. Adjuncts commonly contain information about the content and/or rights associated with the content. Examples of adjuncts include meta data included in a carrier containing rights associated with the content such as in a DRM wrapper, a watermark that is added or embedded in the content, or a signature such as a Digital Signature or message digest or hash value related to the content that is added to, joined with, or otherwise associated to the content. In common applications for an adjunct to content, information in the adjunct is extracted and used to trigger some action by a screening system when the content is to be played or copied or otherwise consumed.

In brief, the adjunct establishes a link between the content and corresponding information. It is commonly included in each copy of the content independent of the physical format of the copy. Sometimes, however, it is stored remotely (i.e., not stored in the same physical location as the content), but associated with content. As the content is propagated through various distribution channels in copies of the content, the content may be repeatedly transformed in those copies (i.e., changed in format). The adjunct, however, is generally not changed in a way that captures what those transformations were or the identities of the copiers. Thus, conventional adjuncts are figuratively memory-less, since they are completely non-informative about the sequence of transformations that the content has undergone or the identities of entities performing those transformations.

If adjuncts had memory, then they could provide dynamic information such as information of content distribution as well as conventionally provided static information such as copy control, origin and ownership of the content. For example, in the case where the content distribution information includes copier related information, the term "dynamic" means that the adjunct to the content is modified at the file or object level each time a copy of the content is generated so as to include copier related information for the generation of that copy.

Thus, a trail of copier related information for a chain of copying from an original copy up to the current copy would be contained in the adjunct to the current content. In the case where the content distribution information includes a trail of network nodes participating in the distribution of content, such as in a P2P network, the term "dynamic" means that the adjunct to content is modified at the packet level each time a packet is relayed through a network node on its way to its final destination. The modification in this case may include the IP address of the network node performing the relay, and information indicating the time of such relay.

If a "direct" approach is used for adding content distribution information to an adjunct to content such as serially adding or concatenating additional information of content distribution to the adjunct each time its associated content is copied or relayed or otherwise undergoes a transformation, then the size of the adjunct grows as the content distribution path gets longer. This may result in objectionable deterioration in the quality of the underlying content when, for example, the adjunct is a watermark embedded in the content, as well as increasing the complexity of embedding information for each successive copy and/or extracting such information of successive copying back out again.

US2002/0059238 describes a method of tracking digital product distribution.

US 2003/125964A1 describes a method of tracking digital product distribution using user identification code for each registered user. A data packet associated with the digital product includes a watermark storing the user ID which is updated with each transfer of the packet to include the user ID of the user who transferred the packet.

Aspects of the present invention are set out in the appended claims.

An "indirect" approach is taken where the content distribution information is not explicitly included in the adjunct as a "list". In such an indirect approach, the content distribution information is preferably manifested instead in a set of reversible transformations that are embedded as a function in the adjunct to content.

An embodiment of the present invention further provides a method for recording content distribution information into an adjunct to content that does not substantially increase the size of the adjunct as the content distribution path gets longer.

Additional features and advantages of the various aspects of the present invention will become apparent from the following description of its preferred embodiment, which description should be taken in conjunction with the accompanying drawings.

## BRIEF DESCRIPTION OF THE DRAWINGS

FIG. 1 illustrates a block diagram of a chain of processing units recording content distribution information in an adjunct to content, according to an embodiment of the present invention.

FIG. 2 illustrates a flow diagram of a method preferably performed by a copier as part of a copy control system for providing content distribution information in an adjunct to content when generating a copy of the content, according to an embodiment of the present invention.

FIG. 3 illustrates a block diagram of a chain of copiers for recording content distribution information in copies of content generated on tangible, removable media by the chain of copiers, according to an embodiment of the present invention

FIG. 4 illustrates a block diagram of a system including a chain of copiers for recording content distribution information in copies of content generated in downloadable files, and at least one computer for extracting content distribution information from selected ones of those copies, according to an embodiment of the present invention.

FIG. 5 illustrates a flow diagram of a method preferably performed by a network node for providing content distribution information in an adjunct to content received in a packet of data, according to an embodiment of the present invention.

FIG. 6 illustrates a flow diagram of a method for extracting content distribution information from an adjunct to content, according to an embodiment of the present invention.

FIG. 7 illustrates a numerical example of successively performing a functional transformation on an original adjunct to content to store content distribution information in the adjunct, according to an embodiment of the present invention.

FIG. 8 illustrates a numerical example of successively performing an inverse transformation on an adjunct to content to extract content distribution information from the adjunct, according to an embodiment of the present invention.

**DETAILED DESCRIPTION OF THE PREFERRED EMBODIMENT**

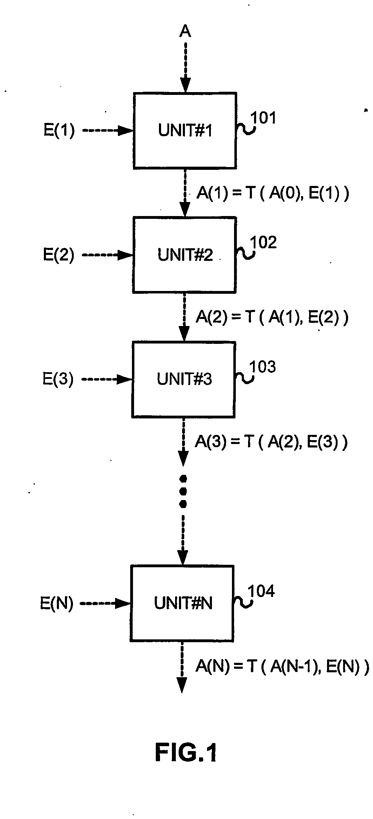

**FIG. 1** illustrates, as an example, a block diagram of a chain of N processing units (including units 101-104) recording content distribution information in a preferred manner in an adjunct to content as the content is being distributed through the N units. The outputs of each of the N units in this case may be of the same format or different formats.

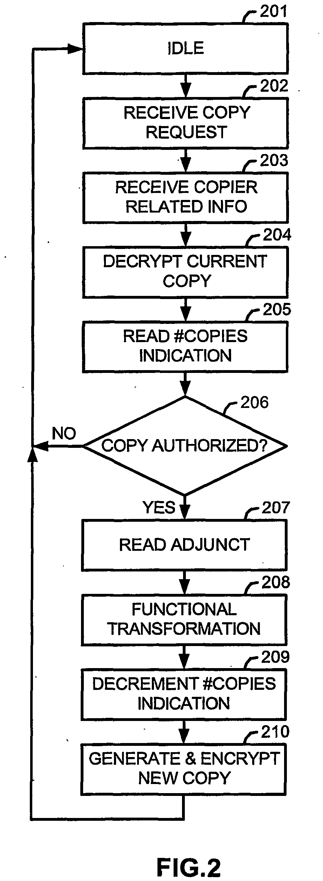

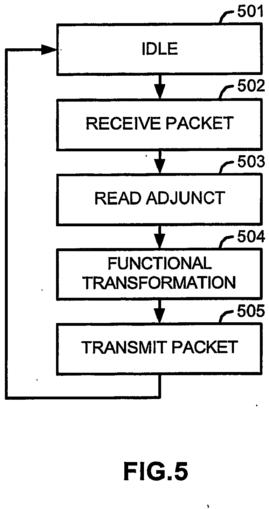

Although in the following description, it is assumed that each of the N units is a copier that generates a copy of the content as described, for example, in reference to **FIGS. 2~4**, various teachings as described in reference to the block diagram are also applicable in the case where each of the N units is a network node that transmits a packet containing content as described, for example, in reference to **FIG. 5**.

In the example, "A(0)" is the original adjunct to content received in an original copy of the content by copier 101 and "E(1)" is the copier related information for generation of a first authorized copy by the copier **101**. The original copy in this case is the first copy in a succession of copies, the first authorized copy is the second copy in the succession of copies, and the copier **101** is the first copier in the chain of copiers. By applying a functional transformation "T" to the original adjunct "A(0)", a modified adjunct "A(1)" is generated:

$$A(1) = T(A(0), E(1)) \qquad\qquad (1)$$

A "functional transformation," as the term is generally understood in mathematics, is a map (i.e., function) whose domain is some set of functions. Thus, functional transformations are functions acting on functions. A well-known example of a functional transformation is the derivative. The derivative is applied to a function, and the result is another function.

The functional transformation used herein has several important characteristics. First, it is characterized by having an inverse transformation that allows extraction of the copier related information back from the modified adjunct. Hence, it is referred to herein as a "reversible transformation." Second, it preferably preserves the size of the adjunct independent of the number of times a functional transformation is performed on it, such as for successive copies of the content by a chain of copiers. By maintaining the size of the adjunct, the functional transformation does not reduce the robustness of the adjunct or the efficiency of embedding and extracting it to and from the content.

The adjunct A(1) is now the adjunct to the content in the copy received by copier **102** (i.e., the second copier in the chain of copiers receiving the second copy in the succession of copies). Since "E(2)" is the copier related information for generation of a copy by the copier **102**, a modified adjunct "A(2)" is generated by applying the functional transformation "T" to the adjunct "A(1)" as follow:

$$A(2) = T(A(1), E(2)) \qquad\qquad (2)$$

By replacing "A(1)" with equation (1), "A(2)" can also be expressed as:

$$A(2) = T((T(A(0), E(1)), E(2)) \qquad\qquad (3)$$

This is now the adjunct to the content in the copy received by copier **103** (i.e., the third copier in the chain of copiers receiving the third copy in the succession of copies). Since "E(3)" is the copier related information for generation of a copy by the copier **103**, a modified adjunct "A(3)" is generated by applying the functional transformation "T" to the adjunct "A(2)" as follow:

$$A(3) = T(A(2), E(3)) \qquad\qquad (4)$$

By replacing "A(2)" with equation (3), "A(3)" can also be expressed as:

$$A(3) = T(T((T(A(0),E(1)),E(2))),E(3)) \qquad (5)$$

This process continues for each copier in the chain of copiers until copier **104** receives a copy of the content (i.e., the Nth copier in the chain of copiers receives the Nth copy of the content in the succession of copies). Straightforward extension of the equations (1), (2), and (4) indicates a modified adjunct of:

$$A(N) = T(A(N-1),E(N)) \qquad (6)$$

for the copy of the content generate by the copier **104**, where "E(N)" is the copier related information for generation of a copy by the copier **104**, and "A(N-1)" is the adjunct to the content of the copy received by the copier **104**.

**FIG. 2** illustrates, as an example, a flow diagram of a method performed in this case by a copier as part of a copy control system for providing content distribution information in an adjunct to content when the copier generates a copy of the content. If a subsequent copy is generated from the generated copy by the same or a different copier, then the method described as follows in reference to **202~210** is also performed for that subsequent copy so that recording of content distribution information for the succession of copies is provided in the adjunct to content in the subsequent copy.

In **202**, the copier receives a request to generate a copy of content from a user of the copier. The term "copier" as used herein includes personal computers and other devices that are configured through either or both hardware and software to generate an authorized copy of content according to this method. The term "content" as used herein includes copyrightable material (such as audio, video, audio-visual, text, graphic images, and computer programs), as well as generally non-copyrightable material such as data. The term "authorized" as used herein means authorized by the owner of the content either directly or indirectly through the owner's agents, representatives, or licensees. The term "user" as used herein means the operator using or otherwise controlling the copier.

In **203**, the copier receives copier related information such as information of a user identification associated with the user of the copier, or an IP address associated with the copier, or information of a copy device if used in generating a copy of the content by the copier. The term "copy device" as used herein includes digital writers such as CD and DVD read/write drives, as well as analog and other recording devices.

In **204**, the current copy of the content is decrypted in a conventional fashion by the copier using a key provided to or already present in the copier. In **205**, an indication of the number of copies authorized to be generated from the current copy is read from a predefined location in the decrypted copy of the content. The term "copy of the content" as used herein means a copy of the content as well as an adjunct to the content. In **206**, the copier determines whether the requested copy is allowable by checking the number of authorized copies indication read out in **205**. If the number of copies indication is one or more, then the requested copy is allowed or authorized to be generated, and the method proceeds to **207**. On the other hand, if the number of copies indication is zero, then the method jumps to **201**, which places the copier back into an idle state.

In **207**, an adjunct to the content is read. In **208**, the adjunct is modified by performing a functional transformation (such as described in reference to **FIG. 1**) on the adjunct using the copier related information received in **203**. After modifying the adjunct by adding copier related information to it, in **209**, the indication of the number of copies authorized to be generated from the current copy is decremented, and the decremented value written back into the predefined location in the decrypted copy of the content so as to overwrite the original number read out in **205**. Finally, in **210**, a new copy of the content is generated by encrypting the previously decrypted content (along with the modified adjunct and decremented number of authorized copies). The method then jumps to **201** to place the copier back into the idle state.

Although described as being used in conjunction with a copy control system, it is to be appreciated that the method for recording content distribution information described herein can also be performed without the copy control system functions **205**, **206**, and **209**, and without the decryption and encryption functions **204** and **210**, and therefore, the method and scope of any claims directed to the method is not to be restricted in any manner as requiring such functions.

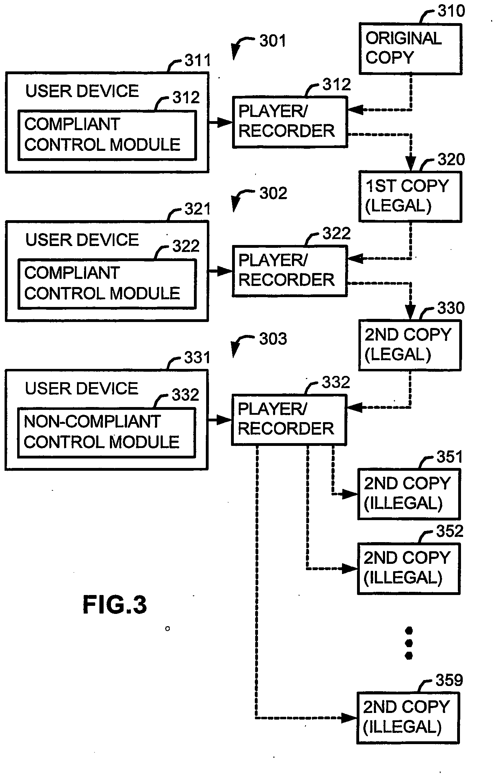

**FIG. 3** illustrates, as an example, a block diagram of a chain of unconnected copiers **301** and **302** recording content distribution information in their respectively generated copies of content on tangible, removable media **320** and **330**. In each of the generated copies, the content distribution information recorded therein includes copier related information for a chain of copiers used in generating a succession of copies leading up to the current generated copy. Copiers **301** and **302** are referred to as being "compliant copiers" since they respond to copy control information stored on received copies (such as **310** and **320**, respectively) to only generate authorized or legal copies (such as **320** and **330**, respectively) of the content. Copier **303**, on the other hand, is referred to as being a "non-compliant copier" since it ignores such copy control information stored on a received copy (such as **330**), thereby allowing non-authorized or illegal copies (such as **351~359**) to be generated.

Each of the copiers **301**, **302** and **303** comprises two primary hardware components - a user device (i.e., **311**, **312** and **313**, respectively) such as a personal computer, and a player/recorder or other digital player and writer device (i.e., **312**, **322** and **332**, respectively) such as a CD or DVD RW disk drive. The user devices **311** and **321** are configured with compliant control modules **312** and **322** that make their respective copiers act as compliant copiers. The user device **331**, on the other hand, is configured with a non-compliant control module **332** which allows its copier to act as a non-compliant copier.

Copies **310**, **320** and **330** are referred to as being a "succession of copies" since copy **330** is generated from copy **320**, and copy **320** is generated in turn from copy **310** (as indicated by dotted lines in **FIG. 3**). Copiers **301** and **302** are referred to as being a "chain of copiers" since they generate a succession of copies. Although shown as different copiers in this example, a chain of copiers may include the same copier more than once in the chain. It is to be noted that copies **351~359** are not a succession of copies since they are not generated from one another. Each of these copies is illegally generated from a same source copy **330**. Since the source copy **330** was a legal copy in this example, each of the illegal copies **351~359** will include the copier related information included in copy **330**, thereby indicating that the user of copier **302** was the party that "leaked" or passed the content to the user operating the non-compliant copier **303**.

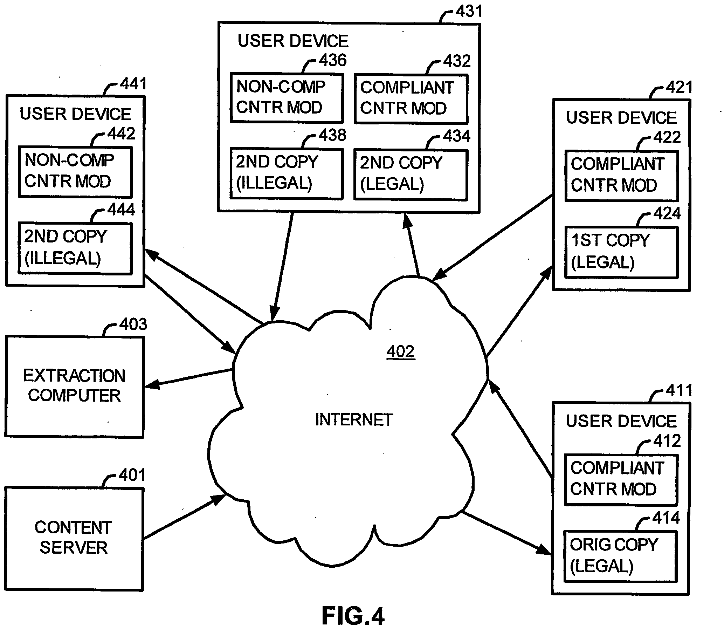

**FIG. 4** illustrates, as an example, a block diagram of a system including a content server **401**, a number of user devices (e.g., **411**, **421**, **431**, and **441**), and an extraction computer **403** communicating with one another over the Internet **402**. Each of the user devices includes a processor unit for running a control module that controls the use and copying of content. A typical example of such a user device is a personal computer.

User devices **411** and **421** respectively include compliant control modules **412** and **422** that only allow authorized copying of content by responding to copy control information stored along with or embedded in the content. User device **441**, on the other hand, includes a non-compliant control module that does not respond to such copy control information, thereby allowing unauthorized copying of the content. User device **431** includes both a compliant control module and a non-compliant control module.

In this example, user device **411** legally downloads an original copy of content **414** from the content server **401** over the Internet **402** after the user or operator of the user device **411** arranges for its payment in any one of various conventional manners such as in a Digital Rights Management system. For the purposes of this example, the copy **414** comes along with a right to make and distribute two additional copies of the content. Information of this right is stored in the copy **414** in a secret location known to compliant control modules, but not necessarily known to non-compliant control modules.

When user device **421** is authorized to download a copy **424** of the content over the Internet **402** from the user device **411**, such downloading is preferably managed by the compliant control modules **412** and **422** communicating and cooperating with one another. Before downloading the copy **424** to the user device **421**, the copy **424** is generated as a downloadable file and stored in memory on the user device **411**. The original copy **414** is also modified to indicate any retained rights to make and distribute additional copies beyond that of the copy **424**.

The copy **424** is generated so as to include copier related information in its adjunct by modifying the adjunct included in the copy **414** with the copier related information in generally the same manner as described in reference to **203~208** of **FIG. 2**. In addition to information of the copier (i.e., information of the copier or user device **411** in this case, and/or information of its user or operator), information of the receiving user device **421** (such as its IP address) and/or its user is also preferably included in the modified adjunct to content included in the copy **424**.

The stored right to make additional copies is also modified in the copy **414**. If the right to make a second copy is retained by the user device **411**, then the copy **414** is modified to indicate that only one additional copy may be made and distributed from it, and the copy **424** is generated so as to indicate that no copies may be made from it. On the other hand, if the right to make a second copy is transferred along with the copy **424** to the user device **421**, then copy **414** is modified to indicate that no more copies may be made from it, and the copy **424** is generated so as to indicate that only one copy may be made and distributed from it.

Assuming that the right to make and distribute one more copy is transferred along with the copy **424** to the user device **421**, then when user device **431** is authorized to download a copy **434** of the content over the Internet **402** from the user device **421**, such downloading is preferably managed by the compliant control modules **422** and **432** communicating and cooperating with one another. Before downloading the copy **434** to the user device **431**, the copy **434** is generated as a downloadable file with no rights to make additional copies indicated therein, and stored in memory on the user device **421**. The first copy **424** is also modified to indicate that there are no remaining rights to make or distribute any copies of the copy **424**.

The copy **434** is generated so as to include copier related information in its adjunct to content by modifying the adjunct included in the copy **424** with the copier related information in generally the same manner as described in reference to **FIG. 1** for successive copies. In addition to information of the copier (i.e., information of the copier or user device **421** in this case, and/or information of its user or operator), information of the receiving user device **431** (such as its IP address) and/or its user is also preferably included in the modified adjunct included in the copy **434**.

In this case, the succession of copies includes the original copy **414**, the first copy **424**, and the second copy **434** of the content, and the chain of copiers includes the user devices **411** and **421**. If the user of the user device **431** thereafter makes an illegal copy **438** of the legal second copy **434**, the illegal copy **438** would include copier related information in its adjunct to the content indicating at least the chain of copiers, and information of the receiving user device **431** of the second copy **434** if that information was also included in the adjunct by the user device **421** when generating the second legal copy **434**. Consequently, any copies of the illegal copy **438**, such as copy **444** residing on user device **441**, would also have such copier related information included in its adjunct to content.

Now, assuming that the right to make and distribute one more copy is retained by the user device **411**, then when user device **431** is authorized to download a copy **434** of the content over the Internet **402** from the user device **411**, such downloading is preferably managed by the compliant control modules **412** and **432** communicating and cooperating with one another. Before downloading the copy **434** to the user device **431**, the copy **434** is generated as a downloadable file with no rights to make additional copies indicated therein, and stored in memory on the user device **411**. The original copy **424** is also modified to indicate that there are no remaining rights to make or distribute any more copies of the original copy **414**.

The copy **434** is generated so as to include copier related information in its adjunct by modifying the adjunct to content included in the copy **414** with its copier related information in generally the same manner as the adjunct included in the copy **424**. In addition to information of the copier (i.e., information of the copier or user device **411** in this case, and/or information of its user or operator), information of the receiving user device **431** (such as its IP address) and/or its user is also preferably included in the modified adjunct included in the copy **434**.

In this second case, there are two successions of copies. The first includes the original copy **414** and the first copy **424**, and the second includes the original copy **414** and the second copy **434**. In both cases, the chain of copiers only includes the user device **411** since it made both copies **424** and **434** and distributed them to the user devices **421** and **431**. If the user of the user device **431** thereafter makes an illegal copy **438** of the legal second copy **434**, the illegal copy **438** would include copier related information in its adjunct indicating the user device **411** as being the last one in its chain of copiers, and indicating the user device **431** as receiving the last authorized or legal copy **434** if that information was also included in the adjunct by the user device **411** when generating the second legal copy **434**. Consequently, any copies of the illegal copy **438**, such as copy **444** residing on user device **441**, would also have such copier related information included in its adjunct to content.

If an illegal copy is detected or otherwise made available to the extraction computer **403**, the extraction computer **403** can perform a succession of inverse transformations on the adjunct to content in the copy so as to extract the copier related information stored therein by compliant control modules such as **412** and **422**. From this information, the user of the extraction computer **403** can identify at least the user and/or user device generating the last authorized copy of the illegal copy, and the recipient of that last authorized copy if that information is included in the copier related information stored in the adjunct.

In addition to the arrangements described in reference to **FIG. 3** in which a succession of copies were each generated on tangible media, and in reference to **FIG. 4** in which a succession of copies were each generated as a computer file, other arrangements including hybrids of these two are fully contemplated as being applicable to and usable with the claimed method for recording content distribution information in an adjunct to content. In particular, in a Peer-to-Peer ("P2P") arrangement, an original copy of the content may be provided on tangible media such as a CD or DVD, and subsequent copies may be generated as downloadable files shared on the Internet. The original copy in this case, as well as all others described herein, may or may not be copy protected. Alternatively, in another P2P arrangement, the original copy may be downloaded by a cable company or other media distribution company to a consumer's set-top box which may then make a back-up copy on tangible media and/or be connected to a home network through which subsequent copies may be generated as downloadable files shared on the Internet.

**FIG. 5** illustrates, as an example, a flow diagram of a method preferably performed within a network node of a network such as a P2P network on the Internet for recording content distribution information in an adjunct to content that is received in a packet of data. In **501**, the method is initially in an idle state. In **502**, a packet of data is received from either a source or a prior network node of the network. In **503**, an adjunct to content contained in the packet is read. In **504**, a functional transformation such as described in reference to **FIG. 1** is performed on the adjunct including information that identifies the network node such as its IP address. If the network node is part of a dynamically changing network (i.e., where each node is represented by a computer operated by an end user, and end users are constantly joining and exiting the network), such as in a Kazaa network, a time stamp or other information indicating the time that a packet is being received and/or relayed by the network node is preferably also included in the modified adjunct by the functional transformation. In **505**, the packet with the modified adjunct is then transmitted or sent off into the network to either a next network node or its final destination.

If all network nodes that the packet travels through between a source node and final destination node perform **501~505** on the packet, then the packet received at the final destination will contain a complete trail of network node identifiers indicating the content distribution path through which the packet has traveled. Since other packets associated with the same content may travel through different distribution paths including different source nodes, an indication of the network topology between the source and final destination nodes may be determined by analyzing the content distribution information contained in the adjuncts of all such packets.

If access to the final destination is not available, for example, because it is participating in an inappropriate act by receiving unauthorized content from the source, then packets in transit may be sniffed out or otherwise intercepted by, for example, a BOT or web crawler that is used to scour the network, pick up packets, analyze the content distribution information contained in adjuncts to content included in the packets, and then send the packets along their way to their final destination(s). This type of action would not require cooperation by either the source or final destination, and could lead to valuable information of the network topology leading back to the source of the packet transmission.

For a dynamically changing network such as a distributed network with de-centralized control, the determination of the network topology should be for a specific time (or time period) since the network topology changes over time. The network topology in this case may be thought of as a dynamically changing network graph with the network node identifiers and related time information extracted from adjuncts to content in packets of data indicating specific paths in the network graph. If large long lasting trends in the network topology turn out to be not so dynamic, then this information may be used to form heuristics about searches and actions taken in utilizing the network. In addition to determining network topology, "supernodes" (i.e., centralized nodes with higher priorities and activity levels) as well as duplicate or unimportant nodes in the network graph may be identified. This information allows for improved searches on the network by removing the duplicate or unimportant nodes from the network graph and providing guidance on where to look first (i.e., the identified supernodes). In addition, such knowledge of the network topology can also be used to "spoof" the network.

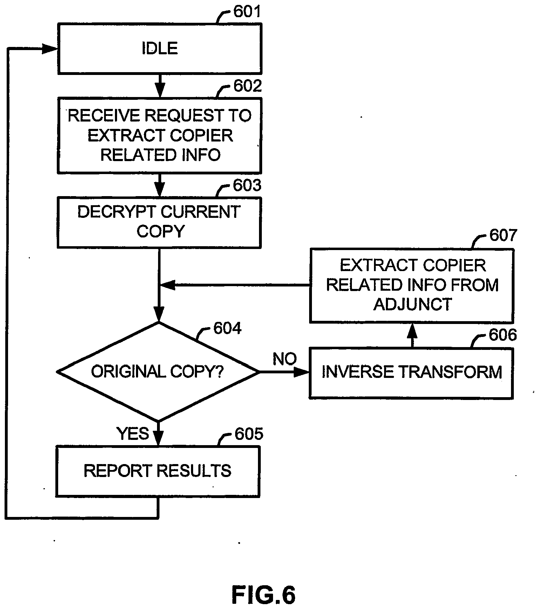

**FIG. 6** illustrates, as an example, a flow diagram of a method for extracting content distribution information from an adjunct to content included in a current copy generated as one of a succession of copies such as described in reference to **FIG. 1**. Although the example is described in reference to extracting copier related information at the file or object level, the extraction technique described herein is equally applicable with appropriate modification for extracting network identifier or other information contained in adjuncts at the packet level.

The copy in this case is referred to as being the current copy, because it is the copy currently being processed by the method. The method is performed by an extraction program residing, for example, on a computer such as the extraction computer **403** of **FIG. 4**, or a consumer electronics device such as a DVD player or a set-top box. Although not an essential part of the method, the extraction program may also have the ability and authority to decrypt before reading the adjunct to the content such as described in reference to the compliant control module **312** in **FIG. 3** and **412** in **FIG. 4**.

In **602**, the extraction program is initiated when it receives a request by a user of the extraction computer to extract copier related information from the adjunct to the content in the current copy. In **603**, it decrypts, if necessary, the current copy in a similar manner as described in reference to **204** of **FIG. 2**.

In **604**, the extraction program checks whether the current copy is an original copy of the content, such as the original copies described in reference to **310** in **FIG. 3** for a "hard" copy (i.e., on a tangible medium) of the content and **414** in **FIG. 4** for a "soft" copy (i.e., in intangible form such as a downloadable file in memory) of the content. In order to determine whether the current copy is the original copy, an indication of such is preferably included in the adjunct. The indication may be a copy number in the succession of copies, starting, for example, with copy number zero for the original copy and incremented by one for each subsequent copy in the succession of copies by the compliant control module generating the copy. On the other hand, the indication may be simply a pattern of bits indicating that the current copy is an original copy of the content that the extraction program recognizes or can otherwise look up through some resource such as the content server described in reference to **401** in **FIG. 4**, an example of which is an ID code connected to a list stored in a backend database.

If the current copy is the original copy, then in **605**, the result is reported to the user of the extraction computer, and the method jumps back to **601** to re-enter the idle state. On the other hand, if the current copy is not the original copy, then in **606**, the method performs an inverse transformation on the adjunct, and in **607**, extracts the copier related information corresponding to the generation of the current copy from the adjunct. The copier related information is then preferably stored for later reporting after extracting all copier related information in the adjunct. The inverse transformation in this case is related to the functional transformation that modified the adjunct to include the copier related information such as described in reference to **208** in **FIG. 2**. After performing the inverse transformation, the adjunct for the prior copy of the content is extracted along with the copier related information in generating the current copy. The method then jumps back to **604** to determine if the adjunct for the prior copy indicates the original copy of the content, and continues to loop through **604**~**607** until an indication is found in one of the inverse transformed adjuncts indicating that the original copy has been reached. Upon such determination, then in **605**, the results for the copier related information for the entire trail of copying is reported out to the user of the extraction computer, and the method jumps back to **601** to re-enter the idle state.

An example now follows to provide a better appreciation of a functional transformation and its inverse transformation as used herein. In the example, let the general form of a functional transformation on the adjunct be:

$$T(A,E,K) = \{T(A,E) \mid T(E,K)\} \qquad (7)$$

where "T" is the functional transformation, "A" is the adjunct to content, "E" is the copier related information, "K" is a master key for securing the adjunct against unauthorized tampering, and the symbol "|" indicates the operation of concatenation.

To simplify the following description, the master key "K" can be assumed to be a secret key that is shared by a compliant control module that performs the functional transformation to include copier related information in the adjunct, and an extraction program that extracts the copier related information from the adjunct. In actual implementation, however, a mechanism based on the public key of the content playing or screening application may be used, as is common in conventional security applications.

If the functional transformation is an exclusive-OR function "XOR" that is performed on an original adjunct "A(0)" using copier related information "E(1)" for generation of the first authorized copy, then the modified adjunct "A(1)" resulting from the functional transformation and to be included in the first authorized copy of the content is equal to the following:

$$A(1) = \{ XOR(A(0),E(1)) \mid XOR(E(1),K) \} \qquad (8)$$

which can also be expressed as the following for simplification purposes:

$$A(1) = B1 \mid B2 \qquad (9)$$

where,

$$B1 = XOR(A(0),E(1)) \qquad (10)$$

$$B2 = XOR(E(1),K) \qquad (11)$$

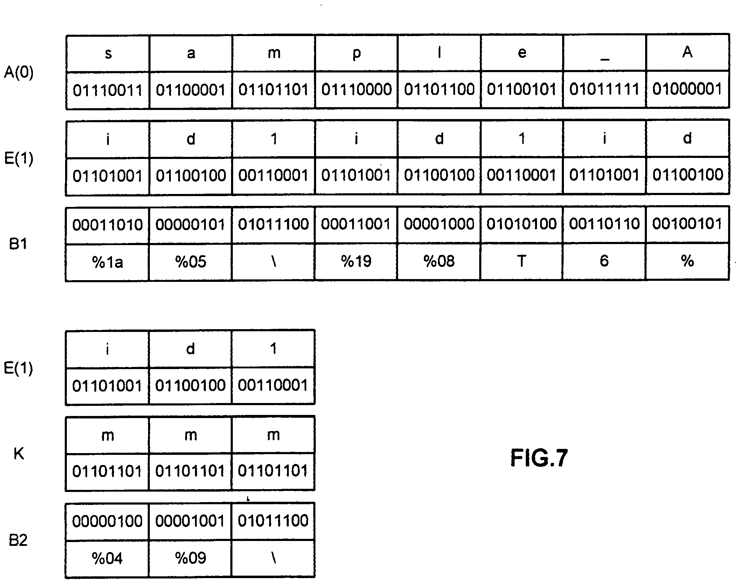

**FIG. 7** illustrates an example of calculations using equations (10) and (11) for determining parts "B1" and "B2" of the first modified or transformed adjunct "A(1)", where the original adjunct "A(0)", the first copier related information "E(1)", and the master key "K" have the following values:

$$A(0) = sample\_A \qquad (12)$$

$$E(1) = id1 \qquad (13)$$

$$K = m \qquad (14)$$

Going in the reverse direction, if an extraction computer receives the first copy including the modified adjunct "A(1)", then the copier related information "E(1)" associated with the generation of that first copy, and the original adjunct "A(0)" to content in the original copy can be extracted from the adjunct "A(1)" in the current copy by applying an inverse transformation using the exclusive-OR "XOR" function as follows:

$$E(1) = XOR(B2,K) \hspace{3cm} (15)$$

$$A(0) = XOR(B1,E(1)) \hspace{3cm} (16)$$

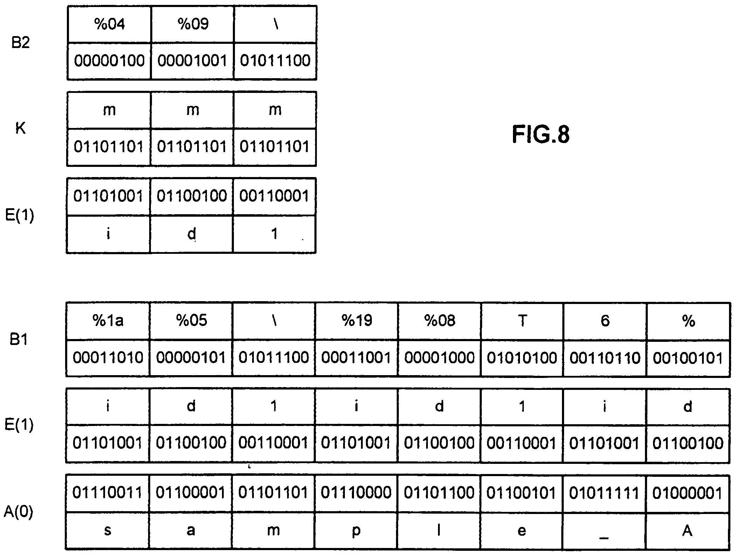

**FIG. 8** illustrates an example of calculations using equations (15) and (16) for extracting "E(1)" and "A(0)" from the adjunct "A(1)" in the first authorized copy of the content, where the values for "B2" and "B1" are those calculated as shown in **FIG. 7**. As can be readily seen from the example, the copier related information "E(1)" associated with the generation of the first authorized copy and the original adjunct "A(0)" are shown as being successfully extracted back out of the adjunct "A(1)".

The example may be further extended to include the generation of a second modified adjunct "A(2)" to content included in a second authorized copy of the content. Assuming copier related information "E(2)" for the generation of the second authorized copy, the modified adjunct "A(2)" to be included in the second authorized copy of the content is equal to the following:

$$A(2) = \{XOR(A(1),E(2)) | XOR(E(2),K)\} \hspace{2cm} (17)$$

which can also be expressed as the following for simplification purposes:

$$A(2) = C1 | C2 \hspace{3cm} (18)$$

where,

$$C1 = XOR(A(1),E(2)) \hspace{3cm} (19)$$

$$C2 = XOR(E(2),K) \hspace{3cm} (20)$$

Now assuming that only the second authorized copy with the second transformed adjunct "A(2)" is received for extraction processing, then the following equations are used in sequence to extract the copier related information, "E(2)" and "E(1)", for the second and first copies, and the first modified and original adjuncts, "A(1)" and "A(0)":

$$E(2) = XOR(C2,K) \hspace{3cm} (21)$$

$$A(1) = XOR(C1,E(2)) = B1 | B2 \hspace{2cm} (22)$$

$$E(1) = XOR(B2, K) \qquad (23)$$

$$A(0) = XOR(B1, E(1)) \qquad (24)$$

Extending the above example for performing additional functional transformations corresponding to additional copies in a succession of copies is straightforward. Likewise, extending the above example for performing additional inverse transformations on the adjunct for subsequent copies in a succession of copies in order to extract the original adjunct and copier related information for a chain of copiers generating the succession of copies is also straightforward.

Although the various aspects of the present invention have been described with respect to a preferred embodiment, it will be understood that the invention is entitled to full protection within the full scope of the appended claims.

**Claims**

1. A method of operating a copier (311,321) for recording content distribution in an adjunct to content, **characterised by** the steps performed by the copier comprising:

   when the copier makes an authorized copy (320) from an original (310) having content and an original adjunct, A(0),
   forming (208) a modified adjunct, A(1), to the content by:

   calculating a first portion B1 by performing an exclusive-OR operation between the original adjunct A(0), and copier related information, E(1), associated with the copier;
   calculating a second portion B2 by performing an exclusive-OR operation between the copier related information, E(1), and a key, K; and
   calculating the modified adjunct, A(1), by concatenating the first portion B1 with the second portion B2;

   generating (210) the authorized copy to include the content and the modified adjunct, A(1); and
   repeating the forming and generating steps when generating further authorized copies using respective copiers to form respective further modified adjuncts A(2), A(3).. to include copier related information E(2), E(3),.. associated with the respective copiers.

2. The method according to claim 1, wherein the adjunct is a watermark embedded in the content, or meta data associated with the content, or a signature related to the content.

3. The method according to claim 2, wherein the signature is a message digest or a hash value calculated using the content.

4. The method according to claim 1, wherein the content is copyrightable material.

5. The method according to claim 1, wherein the copier related information includes information of a user identification associated with a user of a copier used for generation of an authorized copy of the content, or information of an IP address associated with a copier used for generation of an authorized copy of the content, or information of the copier used for generation of the authorized copy of the content.

6. A method of operating an extraction computer (403) to extract copier related information from a modified adjunct A(1) to content provided by a method as claimed in claim 1 wherein the modified adjunct A(1) is composed of a first portion B1 concatenated with a second portion B2,
   wherein the first portion B1 is the result of performing an exclusive-OR operation between an original adjunct A(0) and copier-related information E(1) associated with a copier,
   wherein the second portion B2 is the result of performing an exclusive-OR operation between the copier-related information E(1) and a key K,
   the steps performed by the extraction computer **characterised by** comprising:

an extraction step (607) comprising:

performing an exclusive-OR operation between the second portion B2 and key K to obtain copier related information E(1);
performing an exclusive-OR operation between the first portion B1 and the copier related information E(1) to obtain an adjunct A(0);
and repeating the extraction step in the case of a succession of adjuncts having been generated until an original adjunct is detected.

7. The method according to claim 6, wherein the adjunct is a watermark embedded in the content, or meta data associated with the content, or a signature related to the content.

8. The method according to claim 6, wherein the content is copyrightable material.

9. The method according to claim 6, wherein the copier related information includes information of a user identification associated with a user of a copier, or information of an IP address associated a copier, or information of a copy device used in generating a copy of the content by a copier.

10. Apparatus (311,321) for recording content distribution in an adjunct to content, the apparatus comprising a copier configured, when the copier makes an authorized copy (320) from an original (310) having content and an original adjunct, A(0); to form (208) a modified adjunct, A(1), to the content by:

calculating a first portion B1 by performing an exclusive-OR operation between the original adjunct, A(0), and copier related information, E(1), associated with the copier,
calculating a second portion B2 by performing an exclusive-OR operation between the copier related information, E(1), and a key, K; and
calculating the modified adjunct, A(1), by concentrating the first portion B1 with the second portion B2;
to generate the authorized copy to include the content and the modified adjunct, A(1); and
to repeat the forming and generating when generating further authorized copies using respective copiers to form respective further modified adjuncts A(2),A(3).. to include copier related information E(2),E(3),.. associated with the respective copiers.

11. The apparatus according to claim 10, wherein the copier is a computer, or a consumer electronic device, or a set-top box.

12. The apparatus according to claim 10, wherein the adjunct is a watermark embedded in the content, or meta data associated with the content, or a signature related to the content.

13. The apparatus according to claim 10, wherein the content is copyrightable material.

14. The apparatus according to claim 10, wherein the information associated with the copier includes information of a user identification associated with a user of the copier, or information of an IP address associated with the copier, or information of a copy device used in generating the copy by the copier.

15. The apparatus according to claim 10, wherein the copier is further configured to cause the copy to be generated on a tangible medium or a downloadable file.

16. An apparatus (403) for extracting content distribution information from a copy of content, wherein a modified adjunct A(1) is composed of a first portion B1 concatenated with a second portion B2, the apparatus comprising:

an extraction means comprising:

means for performing an exclusive-OR operation between the second portion B2 and key K to obtain copier related information E(1);
and means for performing an exclusive-OR operation between the first portion B1 and the copier related information E(1) to obtain an adjunct A(0);

and configured to repeat the extraction in the case of a succession of adjuncts having been generated until an original adjunct is detected.

**17.** The apparatus according to claim 16, wherein the adjunct is a watermark embedded in the content, or meta data associated with the content, or a signature related to the content.

**18.** The apparatus according to claim 16, wherein the content is copyrightable material.

**19.** The apparatus according to claim 16, wherein the copier related information includes information of a user identification associated with a user of a copier used to generate one of the authorized copies, or information of an IP address associated with a copier used to generate one of the authorized copies.

**20.** The apparatus according to claim 19, wherein the one of the authorized copies is a downloadable file.

**Patentansprüche**

**1.** Verfahren zum Betreiben einer Kopiereinrichtung (311, 321) zum Aufzeichnen von einer Inhaltsverteilung in einem Zusatz zum Inhalt, **gekennzeichnet dadurch, dass** die von der Kopiereinrichtung ausgeführten Schritte umfassen:

wenn die Kopiereinrichtung eine autorisierte Kopie (320) von einem Original (310) mit einem Inhalt und einem ursprünglichen Zusatz, A(0) macht,
Bilden (208) eines modifizierten Zusatzes, A(1), zum Inhalt durch:

Berechnen eines ersten Abschnitts B1 durch Ausführen einer exklusiven ODER-Operation zwischen dem ursprünglichen Zusatz A(0) und mit der Kopiereinrichtung assoziierten kopiereinrichtungsbezogenen Informationen E(1);
Berechnen eines zweiten Abschnitts B2 durch Ausführen einer exklusiven ODER-Operation zwischen den kopiereinrichtungsbezogenen Informationen, E(1), und einem Schlüssel K, und
Berechnen des modifizierten Zusatzes, A(1), durch Aneinanderfügen des ersten Abschnitts B1 und des zweiten Abschnitts B2;

Erzeugen (210) der autorisierten Kopie, so dass sie den Inhalt und den modifizierten Zusatz, A(1), enthält, und Wiederholen der Bildungs- und Erzeugungsschritte, wenn weitere autorisierte Kopien unter Verwendung von jeweiligen Kopiereinrichtungen erzeugt werden, um jeweilige weitere modifizierte Zusätze A(2), A(3), ... zu bilden, so dass sie mit den jeweiligen Kopiereinrichtungen assoziierte kopiereinrichtungsbezogene Informationen E(2), E(3), ... enthalten.

**2.** Verfahren nach Anspruch 1, wobei der Zusatz ein im Inhalt eingebettetes Wasserzeichen oder mit dem Inhalt assoziierte Metadaten oder eine sich auf den Inhalt beziehende Signatur ist.

**3.** Verfahren nach Anspruch 2, wobei die Signatur eine Nachrichtenkurzfassung oder ein unter Verwendung des Inhalts berechneter Hash-Wert ist.

**4.** Verfahren nach Anspruch 1, wobei der Inhalt urheberrechtlich geschütztes Material ist.

**5.** Verfahren nach Anspruch 1, wobei die kopiereinrichtungsbezogenen Informationen Informationen über eine Benutzeridentifikation, die mit einem Benutzer einer zum Erzeugen einer autorisierten Kopie des Inhalts verwendeten Kopiereinrichtung assoziiert sind, oder Informationen einer IP-Adresse, die mit einer zum Erzeugen einer autorisierten Kopie des Inhalts verwendeten Kopiermaschine assoziiert ist, oder Informationen der zum Erzeugen der autorisierten Kopie des Inhalts verwendeten Kopiereinrichtung enthalten.

**6.** Verfahren zum Betreiben eines Extraktionscomputers (403) zum Extrahieren von kopiereinrichtungsbezogenen Informationen aus einem modifizierten Zusatz A(1) zu Inhalt, der von einem Verfahren nach Anspruch 1 bereitgestellt wird, wobei der modifizierte Zusatz A(1) aus der Zusammenfügung eines ersten Abschnitts B1 und eines zweiten Abschnitts B2 zusammengesetzt ist,
wobei der erste Abschnitt B1 das Ergebnis der Ausführung einer exklusiven ODER-Operation zwischen einem ursprünglichen Zusatz A(0) und mit einer Kopiereinrichtung assoziierten kopiereinrichtungsbezogenen Informationen E(1) ist,

wobei der zweite Abschnitt B2 das Ergebnis der Ausführung einer exklusiven ODER-Operation zwischen den kopiereinrichtungsbezogenen Informationen E(1) und einem Schlüssel K ist,

wobei die vom Extraktionscomputer ausgeführten Schritte **dadurch gekennzeichnet sind, dass** sie umfassen:

einen Extraktionsschritt (607), der umfaßt:

Ausführen einer exklusiven ODER-Operation zwischen dem zweiten Abschnitt B2 und dem Schlüssel K, um kopiereinrichtungsbezogene Informationen E(1) zu erhalten;

Ausführen eines exklusiven ODER-Operation zwischen dem ersten Abschnitt B1 und den kopiereinrichtungsbezogenen Informationen E(1), um einen Zusatz A(0) zu erhalten;

und Wiederholen des Extraktionsschritt in dem Fall, dass eine Folge von Zusätzen erzeugt worden ist, bis ein ursprünglicher Zusatz detektiert wird.

7. Verfahren nach Anspruch 6, wobei der Zusatz ein im Inhalt eingefügtes Wasserzeichen oder mit dem Inhalt assoziierte Metadaten oder eine sich auf den Inhalt beziehende Signatur ist.

8. Verfahren nach Anspruch 6, wobei der Inhalt urheberrechtlich geschütztes Material ist.

9. Verfahren nach Anspruch 6, wobei die kopiereinrichtungsbezogenen Informationen Informationen einer Benutzeridentifikation, die mit einem Benutzer einer Kopiereinrichtung assoziiert sind, oder Informationen einer IP-Adresse, die mit einer Kopiereinrichtung assoziiert ist, oder Informationen einer beim Erzeugen einer Kopie des Inhalts mit einer Kopiereinrichtung verwendeten Kopiervorrichtung sind.

10. Gerät (311, 321) zum Aufzeichnen von einer Inhaltsverteilung in einem Zusatz zu Inhalt, wobei das Gerät eine Kopiereinrichtung umfaßt, die, wenn die Kopiereinrichtung eine autorisierte Kopie (320) von einem Original (310) mit Inhalt und einem ursprünglichen Zusatz, A(0) macht, zu folgendem eingerichtet ist:

einen modifizierten Zusatz, A(1), zum Inhalt zu bilden (208) indem:

ein erster Abschnitt B1 durch Ausführen einer exklusiven ODER-Operation zwischen dem ursprünglichen Zusatz, A(0), und mit der Kopiereinrichtung assoziierten kopiereinrichtungsbezogenen Informationen, E(1), berechnet wird,

ein zweiter Abschnitt B2 durch Ausführen einer exklusiven ODER-Operation zwischen den kopiereinrichtungsbezogenen Informationen, E(1), und einem Schlüssel, K, berechnet wird, und

der modifizierte Zusatz, A(1), durch Zusammenfügen des ersten Abschnitts B1 und des zweiten Abschnitts B2 berechnet wird;

die autorisierte Kopie zu erzeugen, so dass sie den Inhalt und den modifizierten Zusatz, A(1), enthält, und

die Bildungs- und Erzeugungsschritte zu wiederholen, wenn weitere autorisierte Kopien unter Verwendung von jeweiligen Kopiereinrichtungen erzeugt werden, um jeweilige weitere modifizierte Zusätze A(2), A(3), ... zu bilden, so dass sie mit den jeweiligen Kopiereinrichtung assoziierte kopiereinrichtungsbezogene Informationen E(2), E(3), ... enthalten.

11. Gerät nach Anspruch 10, wobei die Kopiereinrichtung ein Computer oder ein elektronisches Endverbrauchergerät oder eine Set-Top-Box ist.

12. Gerät nach Anspruch 10, wobei der Zusatz ein im Inhalt eingebettetes Wasserzeichen oder mit dem Inhalt assoziierte Metadaten oder eine sich auf den Inhalt beziehende Signatur ist.

13. Gerät nach Anspruch 10, wobei der Inhalt urheberrechtlich geschütztes Material ist.

14. Gerät nach Anspruch 10, wobei die mit der Kopiereinrichtung assoziierten Informationen Informationen einer Benutzeridentifikation, die mit einem Benutzer der Kopiereinrichtung assoziiert ist, oder Informationen einer IP-Adresse, die mit der Kopiereinrichtung assoziiert ist, oder Informationen einer Kopiervorrichtung, die beim Erzeugen der Kopie durch die Kopiereinrichtung benutzt wird, enthalten.

15. Gerät nach Anspruch 10, wobei die Kopiereinrichtung ferner dazu eingerichtet ist, die Kopie auf einem berührbaren Medium oder einer herunterladbaren Datei erzeugen zu lassen.

**16.** Gerät (403) zum Extrahieren von Inhaltsverteilungsinformationen aus einer Kopie eines Inhalts, wobei ein modifizierter Zusatz A(1) aus der Zusammenfügung eines ersten Abschnitts B1 und eines zweiten Abschnitts B2 zusammengesetzt ist, wobei das Gerät umfaßt:

eine Extraktionseinrichtung, umfassend:

eine Einrichtung zum Ausführen einer exklusiven ODER-Operation zwischen dem zweiten Abschnitt B2 und einem Schlüssel K, um kopiereinrichtungsbezogene Informationen E(1) zu erhalten; und eine Einrichtung zum Ausführen einer exklusiven ODER-Operation zwischen dem ersten Abschnitt B1 und den kopiereinrichtungsbezogenen Informationen E(1), um einen Zusatz A(0) zu erhalten;

und dazu eingerichtet, die Extraktion zu wiederholen, wenn eine Folge von Zusätzen erzeugt worden ist, bis ein ursprünglicher Zusatz detektiert wird.

**17.** Gerät nach Anspruch 16, wobei der Zusatz ein Inhalt eingebettetes Wasserzeichen oder mit dem Inhalt assoziierte Metadaten oder eine sich auf den Inhalt beziehende Signatur ist.

**18.** Gerät nach Anspruch 16, wobei der Inhalt urheberrechtich geschütztes Material ist.

**19.** Gerät nach Anspruch 16, wobei die kopiereinrichtungsbezogenen Informationen Informationen einer Benutzeridentifikation, die mit einem Benutzer einer beim Erzeugen einer der autorisierten Kopien verwendeten Kopiereinrichtung assoziiert ist, oder Informationen einer IP-Adresse, die mit einer beim Erzeugen einer der autorisierten Kopien verwendeten Kopiereinrichtung assoziiert ist, enthalten.

**20.** Gerät nach Anspruch 19, wobei eine der autorisierten Kopien eine herunterladbare Datei ist.

**Revendications**

**1.** Procédé de fonctionnement d'un dispositif de copie (311, 321) pour enregistrer une distribution de contenu en complément au contenu, **caractérisé par** les étapes exécutées par le dispositif de copie comprenant le fait :

lorsque le dispositif de copie crée une copie autorisée (320) à partir d'un original (310) ayant un contenu et un complément de l'original, A(0), de former (208) un complément modifié, A(1), au contenu en :

calculant une première partie B1 en exécutant une opération OU exclusif entre le complément de l'original A(0) et des informations relatives au dispositif de copie, E(1), associées au dispositif de copie ; calculant une deuxième partie B2 en exécutant une opération OU exclusif entre les informations relatives au dispositif de copie, E(1), et une clé, K ; et calculant le complément modifié, A(1), en concaténant la première partie B1 avec la deuxième partie B2 ;

de générer (210) la copie autorisée de sorte qu'elle inclut le contenu et le complément modifié, A(1) ; et de répéter les étapes de formation et de génération lors de la génération de copies autorisées supplémentaires en utilisant des dispositifs de copie respectifs pour former des compléments modifiés supplémentaires respectifs A(2), A(3) ... afin d'inclure des informations relatives au dispositif de copie E(2), E(3) ... associées aux dispositifs de copie respectifs.

**2.** Procédé selon la revendication 1, dans lequel le complément est un filigrane intégré dans le contenu, ou des métadonnées associées au contenu, ou une signature relative au contenu.

**3.** Procédé selon la revendication 2, dans lequel la signature est un condensé de message ou une valeur de hachage calculé en utilisant le contenu.

**4.** Procédé selon la revendication 1, dans lequel le contenu est un matériau pouvant être protégé par copyright.

**5.** Procédé selon la revendication 1, dans lequel les informations relatives au dispositif de copie comportent des informations d'une identification d'utilisateur associée à un utilisateur d'un dispositif de copie utilisé pour la génération d'une copie autorisée du contenu, ou des informations d'une adresse IP associée à un dispositif de copie utilisé pour la génération d'une copie autorisée du contenu, ou des informations du dispositif de copie utilisé pour la génération de la copie autorisée du contenu.

6. Procédé de fonctionnement d'un ordinateur d'extraction (403) permettant d'extraire des informations relatives à un dispositif de copie à partir d'un complément modifié A(1) au contenu fourni par un procédé tel que revendiqué par la revendication 1 dans lequel le complément modifié A(1) est composé d'une première partie B1 concaténée avec une deuxième partie B2,

dans lequel la première partie B1 est le résultat de l'exécution d'une opération OU exclusif entre un complément de l'original A(0) et des informations relatives au dispositif de copie E(1) associées à un dispositif de copie,

dans lequel la deuxième partie B2 est le résultat de l'exécution d'une opération OU exclusif entre les informations relatives au dispositif de copie E(1) et une clé K,

les étapes exécutées par l'ordinateur d'extraction étant **caractérisées par** le fait de comprendre :

 une étape d'extraction (607) comprenant le fait de :

  exécuter une opération OU exclusif entre la deuxième partie B2 et la clé K pour obtenir des informations relatives au dispositif de copie E(1) ;
  exécuter une opération OU exclusif entre la première partie B1 et les informations relatives au dispositif de copie E(1) pour obtenir un complément A(0) ;
  et répéter l'étape d'extraction dans le cas d'une succession de compléments ayant été générés jusqu'à ce qu'un complément de l'original soit détecté.

7. Procédé selon la revendication 6, dans lequel le complément est un filigrane intégré dans le contenu, ou des métadonnées associées au contenu, ou une signature relative au contenu.

8. Procédé selon la revendication 6, dans lequel le contenu est un matériau pouvant être protégé par copyright.

9. Procédé selon la revendication 6, dans lequel les informations relatives au dispositif de copie comportent des informations d'une identification d'utilisateur associée à un utilisateur d'un dispositif de copie, ou des informations d'une adresse IP associée à un dispositif de copie, ou des informations d'un dispositif de copie utilisé dans la génération d'une copie du contenu par un dispositif de copie.

10. Appareil (311, 321) permettant d'enregistrer une distribution de contenu en complément au contenu, l'appareil comprenant un dispositif de copie configuré pour, lorsque le dispositif de copie crée une copie autorisée (320) à partir d'un original (310) ayant un contenu et un complément de l'original, A(0) :

 former (208) un complément modifié, A(1), au contenu en :

  calculant une première partie B1 en exécutant une opération OU exclusif entre le complément de l'original, A(0), et des informations relatives au dispositif de copie, E(1), associées au dispositif de copie,
  calculant une deuxième partie B2 en exécutant une opération OU exclusif entre les informations relatives au dispositif de copie, E(1), et une clé, K ; et
  calculant le complément modifié, A(1), en concaténant la première partie B1 avec la deuxième partie B2 ;

 générer la copie autorisée afin d'inclure le contenu et le complément modifié, A(1) ; et
 répéter la formation et la génération lors de la génération de copies autorisées supplémentaires en utilisant des dispositifs de copie respectifs pour former des compléments modifiés supplémentaires respectifs A(2), A(3)... afin d'inclure des informations relatives au dispositif de copie E(2), E(3)... associées aux dispositifs de copie respectifs.

11. Appareil selon la revendication 10, dans lequel le dispositif de copie est un ordinateur, ou un dispositif électronique grand public, ou un boîtier adaptateur.

12. Appareil selon la revendication 10, dans lequel le complément est un filigrane intégré dans le contenu, ou des métadonnées associées au contenu, ou une signature relative au contenu.

13. Appareil selon la revendication 10, dans lequel le contenu est un matériau pouvant être protégé par copyright.

**14.** Appareil selon la revendication 10, dans lequel les informations associées au dispositif de copie comportent des informations d'une identification d'utilisateur associée à un utilisateur du dispositif de copie, ou des informations d'une adresse IP associée au dispositif de copie, ou des informations d'un dispositif de copie utilisé dans la génération de la copie par le dispositif de copie.

**15.** Appareil selon la revendication 10, dans lequel le dispositif de copie est en outre configuré pour permettre la génération de la copie sur un support tangible ou un fichier téléchargeable.

**16.** Dispositif (403) d'extraction d'informations de distribution de contenu à partir d'une copie de contenu, dans lequel un complément modifié A(1) est composé d'une première partie B1 concaténée avec une deuxième partie B2, l'appareil comprenant :

un moyen d'extraction comprenant :

un moyen pour exécuter une opération OU exclusif entre la deuxième partie B2 et la clé K afin d'obtenir des informations relatives au dispositif de copie E(1) ;
et un moyen pour exécuter une opération OU exclusif entre la première partie B1 et les informations relatives au dispositif de copie E(1) afin d'obtenir un complément A(0) ;

et configuré pour répéter l'extraction dans le cas d'une succession de compléments ayant été générés jusqu'à ce qu'un complément de l'original soit détecté.

**17.** Appareil selon la revendication 16, dans lequel le complément est un filigrane intégré dans le contenu, ou des métadonnées associées au contenu, ou une signature relative au contenu.

**18.** Appareil selon la revendication 16, dans lequel le contenu est un matériau pouvant être protégé par copyright.

**19.** Appareil selon la revendication 16, dans lequel les informations relatives au dispositif de copie comportent des informations d'une identification d'utilisateur associée à un utilisateur d'un dispositif de copie utilisé pour générer l'une des copies autorisées, ou des informations d'une adresse IP associée à un dispositif de copie utilisé pour générer une des copies autorisées.

**20.** Appareil selon la revendication 19, dans lequel l'une des copies autorisées est un fichier téléchargeable.

A

E(1) ----→ | UNIT#1 | ∿ 101

A(1) = T ( A(0), E(1) )

E(2) ----→ | UNIT#2 | ∿ 102

A(2) = T ( A(1), E(2) )

E(3) ----→ | UNIT#3 | ∿ 103

A(3) = T ( A(2), E(3) )

E(N) ----→ | UNIT#N | ∿ 104

A(N) = T ( A(N-1), E(N) )

FIG.1

```
                                              ┌─ 201
                    ┌──────────────────────┐
          ┌────────▶│         IDLE         │
          │         └──────────────────────┘
          │                     │
          │                     ▼            ┌─ 202
          │         ┌──────────────────────┐
          │         │     RECEIVE COPY      │
          │         │       REQUEST         │
          │         └──────────────────────┘
          │                     │
          │                     ▼            ┌─ 203
          │         ┌──────────────────────┐
          │         │    RECEIVE COPIER     │
          │         │     RELATED INFO      │
          │         └──────────────────────┘
          │                     │
          │                     ▼            ┌─ 204
          │         ┌──────────────────────┐
          │         │   DECRYPT CURRENT     │
          │         │        COPY           │
          │         └──────────────────────┘
          │                     │
          │                     ▼            ┌─ 205
          │         ┌──────────────────────┐
          │         │    READ #COPIES       │
          │         │     INDICATION        │
          │         └──────────────────────┘
          │                     │
          │                     ▼            ┌─ 206
          │  NO            ◇─────────◇
          └───────────────◇  COPY AUTHORIZED? ◇
                           ◇─────────◇
                                │
                            YES │            ┌─ 207
                    ┌──────────────────────┐
                    │     READ ADJUNCT      │
                    └──────────────────────┘
                                │
                                ▼            ┌─ 208
                    ┌──────────────────────┐
                    │     FUNCTIONAL        │
                    │   TRANSFORMATION      │
                    └──────────────────────┘
                                │
                                ▼            ┌─ 209
                    ┌──────────────────────┐
                    │  DECREMENT #COPIES    │
                    │     INDICATION        │
                    └──────────────────────┘
                                │
                                ▼            ┌─ 210
                    ┌──────────────────────┐
                    │  GENERATE & ENCRYPT   │
                    │      NEW COPY         │
                    └──────────────────────┘
```

**FIG.2**

FIG.3

**FIG.4**

EP 1 692 583 B1

```
                                    ┌─ 501
          ┌──────────────────────────────┐
   ┌─────▶│            IDLE              │
   │      └──────────────────────────────┘
   │                     │
   │                     ▼       ┌─ 502
   │      ┌──────────────────────────────┐
   │      │       RECEIVE PACKET         │
   │      └──────────────────────────────┘
   │                     │
   │                     ▼       ┌─ 503
   │      ┌──────────────────────────────┐
   │      │        READ ADJUNCT          │
   │      └──────────────────────────────┘
   │                     │
   │                     ▼       ┌─ 504
   │      ┌──────────────────────────────┐
   │      │         FUNCTIONAL           │
   │      │       TRANSFORMATION         │
   │      └──────────────────────────────┘
   │                     │
   │                     ▼       ┌─ 505
   │      ┌──────────────────────────────┐
   │      │       TRANSMIT PACKET        │
   │      └──────────────────────────────┘
   │                     │
   └─────────────────────┘
```

# FIG.5

```
                                    ┌─ 601
        ┌──────────────────────────┐
    ┌──▶│           IDLE           │
    │   └──────────────────────────┘
    │                 │
    │                 ▼        ┌─ 602
    │   ┌──────────────────────────┐
    │   │   RECEIVE REQUEST TO     │
    │   │    EXTRACT COPIER        │
    │   │      RELATED INFO        │
    │   └──────────────────────────┘
    │                 │
    │                 ▼        ┌─ 603
    │   ┌──────────────────────────┐          ┌─ 607
    │   │    DECRYPT CURRENT       │   ┌──────────────────────────┐
    │   │         COPY             │   │     EXTRACT COPIER        │
    │   └──────────────────────────┘   │   RELATED INFO FROM       │
    │                 │                │       ADJUNCT             │
    │                 │            ◀────└──────────────────────────┘
    │                 ▼                              ▲
    │         ╱─── 604 ╲                             │         ┌─ 606
    │        ╱           ╲        NO   ┌──────────────────────────┐
    │       ╱ ORIGINAL    ╲──────────▶│    INVERSE TRANSFORM     │
    │       ╲  COPY?      ╱            └──────────────────────────┘
    │        ╲           ╱
    │         ╲ YES ─── ╱
    │              │           ┌─ 605
    │              ▼
    │   ┌──────────────────────────┐
    │   │     REPORT RESULTS       │
    │   └──────────────────────────┘
    │              │
    └──────────────┘
```

**FIG.6**

EP 1 692 583 B1

**A(0)**

| s | a | m | p | l | e | _ | A |
|---|---|---|---|---|---|---|---|
| 01110011 | 01100001 | 01101101 | 01110000 | 01101100 | 01100101 | 01011111 | 01000001 |

**E(1)**

| i | d | 1 | i | d | 1 | i | d |
|---|---|---|---|---|---|---|---|
| 01101001 | 01100100 | 00110001 | 01101001 | 01100100 | 00110001 | 01101001 | 01100100 |

**B1**

| 00011010 | 00000101 | 01011100 | 00011001 | 00001000 | 01010100 | 00110110 | 00100101 |
|---|---|---|---|---|---|---|---|
| %1a | %05 | \ | %19 | %08 | T | 6 | % |

**E(1)**

| i | d | 1 |
|---|---|---|
| 01101001 | 01100100 | 00110001 |

**K**

| m | m | m |
|---|---|---|
| 01101101 | 01101101 | 01101101 |

**B2**

| 00000100 | 00001001 | 01011100 |
|---|---|---|
| %04 | %09 | \ |

**FIG.7**

EP 1 692 583 B1

**FIG.8**

B2

| %04 | %09 | \ |
|---|---|---|
| 00000100 | 00001001 | 01011100 |

K

| m | m | m |
|---|---|---|
| 01101101 | 01101101 | 01101101 |

E(1)

| 01101001 | 01100100 | 00110001 |
|---|---|---|
| i | d | 1 |

B1

| %1a | %05 | \ | %19 | %08 | T | 6 | % |
|---|---|---|---|---|---|---|---|
| 00011010 | 00000101 | 01011100 | 00011001 | 00001000 | 01010100 | 00110110 | 00100101 |

E(1)

| i | d | 1 | i | d | 1 | i | d |
|---|---|---|---|---|---|---|---|
| 01101001 | 01100100 | 00110001 | 01101001 | 01100100 | 00110001 | 01101001 | 01100100 |

A(0)

| 01110011 | 01100001 | 01101101 | 01110000 | 01101100 | 01100101 | 01011111 | 01000001 |
|---|---|---|---|---|---|---|---|
| s | a | m | p | l | e | _ | A |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020059238 A

- US 2003125964 A1